# EUROPEAN PATENT APPLICATION

(11) **EP 0 645 661 A1**
(43) Date of publication of application: **29.03.1995**
(21) Application number: 94114664.9
(22) Date of filing: 17.09.1994
(51) Int. Cl.: G02F 1/1335

(54) **Liquid crystal projection panel**

(30) Priority: 29.09.1993 JP 52642/93 U
(71) Applicant: MINNESOTA MINING AND MANUFACTURING COMPANY, St. Paul, Minnesota 55133-3427 (US)
(72) Inventor: Willett, Stephen J., c/o Minnesota Mining and, St.Paul, Minnesota 55133-3427 (JP)
(74) Representative: Hilleringmann, Jochen, Dipl.-Ing.

(57) **Abstract**

A liquid crystal projection panel (10) having a liquid crystal display (20) sandwiched between a pair of microlens arrays (32, 34). The liquid crystal display and the microlens arrays are positioned between and spaced apart from a pair of polarizers (52, 54). This physical decoupling (72, 74) of the polarizers and microlens arrays ensures that the thermal contraction and expansion of the polarizers will not affect the registration between the pixels (26) in the liquid crystal display and the microlenses.

## Description

### Field of the Invention

The present invention relates generally to liquid crystal displays, and more particularly to liquid crystal displays used as projection panels.

### Background of the Invention

Thin, lightweight liquid crystal displays have become popular for use in electronic presentation devices, computer displays, and entertainment devices. In particular, active matrix addressed liquid crystal displays (most commonly of the thin film transistor type) offer high information content, full color, high contrast, and fast video refresh rate. However, these liquid crystal displays suffer from low transmission, typically 3-5%, which necessitates high power backlights and reduced ambient lighting. A major factor in the low transmission is the aperture ratio of about 30-40% to accommodate space for transistors and bus lines on the display. Microlenses can be used to guide light through the apertures, thereby recovering most of the lost light, and increasing the transmission rate to about 6-15%.

It would be desirable to have a liquid crystal display projection panel of the type described above, yet possessing improved transmission.

### Summary of the Invention

Accordingly, the present invention includes a liquid crystal projection panel having a liquid crystal display sandwiched between a pair of microlens arrays. The liquid crystal display and the microlens arrays are positioned between and spaced apart from a pair of polarisers. This decoupling of the polarisers and the microlenses ensures that the thermal contraction and expansion of the polarizers will not affect the registration between the pixels in the liquid crystal display and the microlenses.

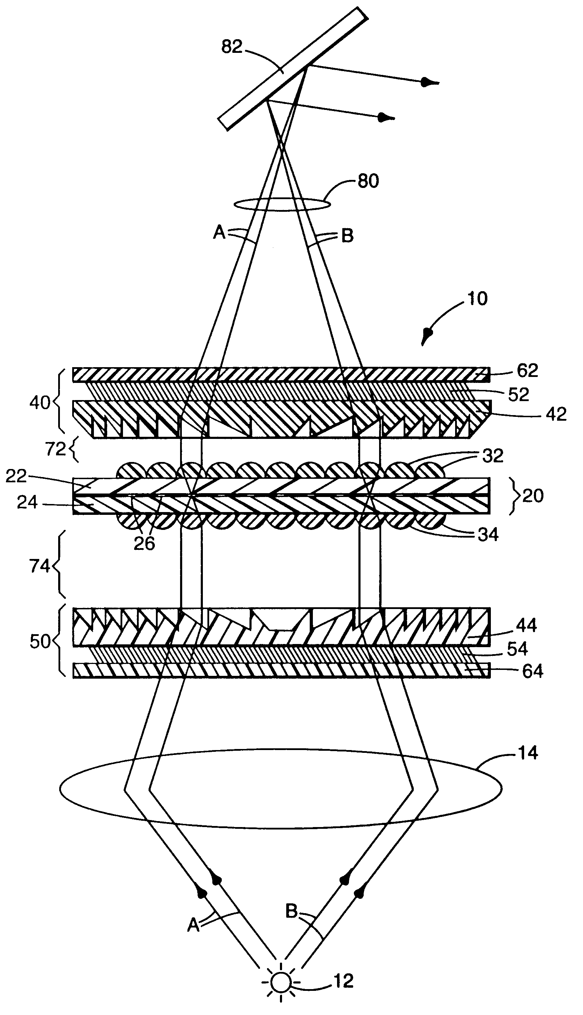

### Brief Description of the Drawing

The FIGURE shows a schematic cross-sectional side view of a liquid crystal projection panel according to the present invention.

### Detailed Description

A liquid crystal projection panel 10 according to the present invention is shown in the FIGURE. Projection panel 10 includes a liquid crystal display 20, which is comprised of a plurality of pixels 26 arranged regularly between two optically transparent substrates 22 and 24. Microlens arrays 32 and 34 are attached to the outer surfaces of substrates 22 and 24, respectively.

Projection panel 10 also includes laminate structures 40 and 50, which are spaced from microlens arrays 32 and 34, respectively, by spacings 72 and 74, respectively. Laminated structure 40 is comprised of hard protective surface 62, polarizer 52, and optional fresnel lens 42. Similarly, laminated structure 50 is comprised of hard protective surface 64, polarizer 54, and optional fresnel lens 44. Laminated structures 40 and 50 minimize the number of air interfaces in projection panel 10, thereby maximizing light transmission through the panel.

Projection panel 10 operates as follows. Light source 12 emits diverging light rays A and B toward converging optics 14, which causes the light rays to converge toward each other as they approach panel 10. Converging light rays A and B then pass through hard protective surface 64 and polarizer 54 and are collimated by diverging fresnel lens 44.

Collimated rays A and B then pass through spacing 74 and are focused by microlens array 34 toward pixels 26 in liquid crystal display 20. Light rays A and B are then recollimated by microlens array 32 and pass through spacing 72. Thus, the microlenses in arrays 32 and 34 must be in precise registration with pixels 26.

Collimated rays A and B then pass through converging fresnel lens 42, polarizer 52, and hard protective surface 62. Light rays A and B then proceed through projection lens 80 and are reflected by optional mirror 82 toward a viewing screen (not shown).

In an alternative embodiment (not shown), projection panel 10 does not include fresnel lenses 42 and 44. In that embodiment, light rays A and B are still converging when they reach microlens array 34. Thus, the microlenses of arrays 32 and 34 must be aligned so that light rays passing through the pixels 26 pass through the centers of the microlenses, i.e., the center-to-center spacing of adjacent microlenses 32 must be less than the center-to-center spacing of pixels 26, which must in turn be less than the center-to-center spacing of microlenses 34. Additionally, the focal length of each microlens in arrays 32 and 34 will be a function of the location of the microlens with respect to the center of the array.

Polarizers 52 and 54 are preferably absorbing dye type polarizers and should be oriented with respect to each other so that liquid crystal display 20 operates in the desired mode (normally white or normally black). Hard protective surfaces 62 and 64 are preferably glass or scratch-resistant plastic. In an alternative embodiment, polarizers 52 and 54 could be thick and hard protective surfaces 62 and 64 could instead be protective coatings that were provided on the polarizers. Fresnel lenses 42 and 44 are preferably optical plastic such as cellulose acetate butyrate, polycarbonate, or acrylic.

Microlens arrays 32 and 34 are preferably flexible, plastic, and refractive. Liquid crystal display 20 is preferably a thin film transistor (TFT) display.

Spacings 72 and 74 preferably include a gas, such as air. Forced air could be provided through spacings 72 and 74 to cool polarizers 52 and 54 and the display electronics (not shown). Laminated structures 40 and 50 should be separated from microlens arrays 32 and 34, respectively, by about 0.2 to 2 cm.

In the present invention, polarizers 52 and 54 are not bonded to liquid crystal display 20 or microlens arrays 32 and 34. This is advantageous for two reasons. First, this minimizes the distance between microlens arrays 32 and 34 and liquid crystal display 20 because polarizers 52 and 54 are not interposed between the display and the arrays, thereby maximizing the brightness benefit when pixels 26 are narrow, substrates 22 and 24 are thick, and the cone angle of light source 12 is large. Second, because polarizers 52 and 54 are physically decoupled from microlens arrays 32 and 34 and liquid crystal display 20, thermal contraction and expansion of the polarizers will not affect the registration between the microlenses in the microlens arrays and pixels 26 in the liquid crystal display. Third, separation of polarizers 52 and 54 from the surface of liquid crystal display 20 prevents the heat generated in the polarizers during high illumination from being directly conducted to the liquid crystal display.

## Claims

1. A liquid crystal projection panel (10), including:
a pair of polarizers (52, 54) spaced from each other;
a liquid crystal display (20) interposed between the polarizers, the display having a microlens array (32, 34) on each of its two major surfaces, wherein the polarizers are physically decoupled (72, 74) from the microlens arrays.
